Europäisches Patentamt

European Patent Office

Office européen des brevets

(11) Veröffentlichungsnummer: **0 336 227**
**A1**

## (12) EUROPÄISCHE PATENTANMELDUNG

(21) Anmeldenummer: 89105216.9

(22) Anmeldetag: 23.03.89

(51) Int. Cl.⁴ **C08G 63/70 , C08L 101/00 , C08L 27/06 , //(C08L101/00, 67:02,27:06)**

(30) Priorität: 06.04.88 DE 3811449

(43) Veröffentlichungstag der Anmeldung:
11.10.89 Patentblatt 89/41

(84) Benannte Vertragsstaaten:
**DE FR GB IT NL SE**

(71) Anmelder: **BAYER AG**

**D-5090 Leverkusen 1 Bayerwerk(DE)**

(72) Erfinder: **Heuser, Jürgen, Dr.**
**Minkweg 29a**
**D-4150 Krefeld(DE)**
Erfinder: **Meier, Lothar, Dr.**
**Buchenstrasse 31b**
**D-4322 Sprockhövel 2(DE)**
Erfinder: **Brudermanns, Karola**
**Dechant-Krey-Strasse 24**
**D-5090 Leverkusen 3(DE)**
Erfinder: **Billinger, Otto, Dipl.-Ing.**
**Birkenstrasse 13**
**D-5460 Linz(DE)**
Erfinder: **Kubens, Rolf, Dr.**
**Carl-Leverkus-Strasse 1**
**D-5068 Odenthal(DE)**

(54) Verfahren zur Verminderung der Fogentwicklung durch Weichmacher in Kunststoffen.

(57) Die Erfindung betrifft ein Verfahren zur Verminderung der Fogentwicklung durch Weichmacher in Kunststoffen.

EP 0 336 227 A1

## Verfahren zur Verminderung der Fogentwicklung durch Weichmacher in Kunststoffen

Die Erfindung betrifft ein Verfahren zur Verminderung der Fogentwicklung durch Weichmacher in Kunststoffen.

Bekanntlich verursachen Weichmacher in Kunststoffen eine Fogentwicklung (Fogging), wie sie z.B. an den Innenseiten der Scheiben von Automobilen, die Inneneinrichtungen (z.B. Dash-boards) aus Kunststoffen besitzen, durch Beschlagen beobachtet werden können.

Polymere Weichmacher, z.B. Polyester der Phthalsäure oder Adipinsäure (z.B. Ultramoll® I, II oder III) sowie deren großtechnische Herstellung sind seit langem bekannt. Sie finden in den für Weichmacher typischen und bekannten Einsatzmöglichkeiten Verwendung (z.B. kalandrierten PVC-Folien). Probleme bereitet der Einsatz solcher Polymerweichmacher immer dann, wenn erhöhte Anforderungen bezüglich Fogging an Weichmacher gestellt werden, wie z.B. im KFZ-Folienbereich. Insbesondere bei PVC-Häuten, die nach dem slush-moulding Verfahren hergestellt werden, stellt das Foggingverhalten der eingesetzten monomeren und polymeren Weichmacher angesichts der Anfoderungen seitens der Automobilindustrie ein noch nicht gelöstes Problem dar.

Es wurde nun gefunden, daß bei Verwendung polymerer Weichmacher in Kunststoffen das Fogging nahezu vermieden werden kann und auch unter extremen Bedingungen (z.B. Hitzeeinwirkung) in nur untergeordnetem Ausmaß beobachtet werden kann, wenn im Anschluß an den Herstellungsprozeß des polymeren Weichmachers dieser mit Wasserdampf nachbehandelt wird.

Gegenstand der Erfindung ist daher ein Verfahren zur Verminderung des Fogging bei Verwendung polymerer Weichmacher in Kunststoffen, dadurch gekennzeichnet, daß der polymere Weichmacher nach seiner Herstellung, vorzugsweise in der Schmelze, mit Wasserdampf behandelt wird.

Derart behandelte Polymerweichmacher stellen eine deutliche Verbesserung der bislang bekannten Weichmacherqualitäten bezüglich Fogging dar und können einen bemerkenswerten Beitrag zur Vermeidung der aus verkehrssicherheitstechnischer Sicht unerwünschten Foggingbeläge auf den Innenseiten der Fensterscheiben von Automobilen leisten.

Außerdem können die erfindungsgemäß behandelten Weichmacher neben den bekannten Einsatzmöglichkeiten auch z.B. zur Herstellung von powder-slush compounds verwendet werden.

Erfindungsgemäß können alle polymeren Weichmacher, z.B. Ultramolle® (z.B. Ultramoll® I, II, III), Polyester wie Polyadipate, Polyphthalate u.s.w. vorbehandelt werden.

Bei der Herstellung von Polyesterweichmachern erhält man z.B. bei Polyadipinsäureestern eine Schmelze bestehend aus einem Polykondensat aus z.B. Adipinsäureester und 1,3-Butandiol und/oder 1,4-Butandiol und z.B. gegebenenfalls aus Adipinsäure, 1,3-Butandiol and 1,4-Hexandiol und/oder 1,6-Hexandiol. Tabelle I bei den Beispielen gibt eine Übersicht der charakteristischen Kerngrößen eines solchen Polyadipats.

Die erfindungsgemäß behandelten polymeren Weichmacher eignen sich vorzugsweise als Weichmacher in Kunststoffen die zur Herstellung foggingarmer Folien z.B. nach Kalander-und/oder slush-moulding Verfahren verwendet werden.

Erfindungsgemäß werden die polymeren Weichmacher nach ihrer Herstellung mit Wasserdampf, vorzugsweise mit überhitztem Wasserdampf (bis 250° C) behandelt. Dabei wird vorzugsweise der Wasserdampf über eine Düse in den Reaktor eingeblasen, in dem der polymere Weichmacher nach seiner Herstellung vorzugsweise in geschmolzener Form vorliegt. Dabei können z.B. flüchtige, niedermolekulare Bestandteile aus dem Reaktor entfernt werden und gegebenenfalls separat auskondensiert werden.

### Beispiele

Die Schmelze z.B. des in Tabelle I charakterisierten Polyadipinsäureesters wird 20 Stunden, mindestens jedoch 15 Stunden mit Wasserdampf einer Temperatur von ca. 150° C behandelt.

Durch Verbesserung der Wasserdampfverteilung, z.B. durch Einbau einer Verteilerdüse läßt sich jedoch der Zeitbedarf erheblich, z.B. auf 5 Stunden, senken. Dabei werden die flüchtigen, niedermolekularen Bestandteile aus dem Polykondensationskessel ausgeblasen und separat auskondensiert.

Für einen Polyadipinsäureester, bestehend aus Adipinsäure, 1,3-Butandiol und 1,4-Butandiol zeigt das resultierende Endprodukt (im folgenden Polyadipat I genannt), die in Tabelle II wiedergegebenen Foggingwerte im Vergleich zu Foggingwerten desselben Polyadipats (im folgenden Polyadipat II genannt) vor der erfindungsgemäßen Behandlung. Die übrigen Kennzahlen und Eigenschaften eines solchen Polyadipats bleiben unverändert, so z.B. die mechanischen Eigenschaften von PVC-Mischungen (Tabelle III).

2

Tabelle I

| Eigenschaften | Prüfmethode | Dimension | |
|---|---|---|---|
| Dichte d 50/4 | DIN 51 757 | g/cm$^3$ | 1,100-1,115 |
| Viskosität bei 50° C | DIN 53 015 | mPa.s | 2000-3000 |
| Brechungszahl n$_D$ 20° C | DIN 53 491 | - | 1,472-1,473 |
| Siedepunkt bei 5 mbar | | ° C | nicht bestimmbar |
| Flammpunkt [1] | DIN ISO 2592 | ° C | 280-300 |
| Flüchtigkeit 0-72 h/90° C | Brabender | % | ≦ 1,0 |
| Flüchtigkeit 48-72 h/90° C | Brabender | % | ≦ 0,1 |
| Säurezahl | DIN 53 402 | mgKOH/1gWM[2] | ≦ 1,0 |
| Verseifungszahl | DIN 53 401 | mgKOH/1gWM[2] | 510-540 |
| Hazen-Farbzahl | DIN 53 409 | - | ≦ 150 |
| Pourpoint | DIN 51 597 | ° C | ≦ ±01 |
| Wassergehalt | DIN 51 777 | % | ≦ 0,1 |
| Lösetemperatur | DIN 53 408/B | ° C | 166 |

[1] im offenen Tiegel
[2] WM = Weichmacher

Tabelle II

| Foggingverhalten nach DIN 75 201 eines Polyadipinsäureesters vor und nach der Behandlung mit überhitzem Wasserdampf (150° C) | | | |
|---|---|---|---|
| Foggingverhalten nach DIN 75 201 | nach 6 h 90° C (%) | nach 6 h 120° C (%) | nach 6 h 135° C (%) |
| Polyadipat I | 99 | 79 | 70 |
| Polyadipat II | nicht meßbar (0) | nicht meßbar (0) | nicht meßbar (0) |

Tabelle III

| Mechanische Eigenschaften von PVC/Polyadipat-Mischungen | | | |
|---|---|---|---|
| Werte gemessen an Preßplatten, die gemäß DIN 7749, Blatt 2 hergestellt wurden. Rezeptur: 70 Tle. S-PVC (K-Wert: 70); 30 Tle. Polyadipat I oder II, 1,5 Tle. Ba/Cd-Laurat, 3 Tle. epoxidiertes Sojabohnenöl. | | | |
| Art der Prüfung | Dimension | Prüfvorschrift | |
| Zugfestigkeit | MPa | DIN 53 455 | 26,1 |
| Spannung bei 100 % Dehnung | MPa | DIN 53 455 | 15,5 |
| Bruchdehnung | % | DIN 53 455 | 331 |
| Weiterreißwiderstand | kN/m | DIN 53 515 | 92 |
| Shore-Härte A (15") | | DIN 53 505 | 92 |
| Shore-Härte D (15") | | DIN 53 505 | 41 |
| Kältebruchtemperatur | ° C | DIN 53 372 | -14 |

**Ansprüche**

1. Verfahren zur Verminderung des Fogging bei Verwendung polymerer Weichmacher in Kunststoffen, dadurch gekennzeichnet, daß der polymere Weichmacher nach seiner Herstellung, vorzugsweise in der Schmelze, mit Wasserdampf behandelt wird.

2. Verfahren nach Anspruch 1, dadurch gekennzeichnet, daß der Wasserdampf überhitzt ist.

3. Verfahren nach Anspruch 1, dadurch gekennzeichnet, daß der Wasserdampf über eine Düse eingeblasen wird.

4. Verfahren nach Anspruch 1, dadurch gekennzeichnet, daß Polyesterweichmacher eingesetzt werden.

5. Verfahren nach Anspruch 1, dadurch gekennzeichnet, daß Polyadipinsäureester eingesetzt werden.

6. Verfahren nach Anspruch 1, dadurch gekennzeichnet, daß Polyphthalsäureester eingesetzt werden.

7. Verwendung der nach Anspruch 1 behandelten polymeren Weichmacher als Weichmacher in Kunststoffen.

8. Verwendung nach Anspruch 7 zur Herstellung von powder-slush compounds.

9. Verwendung nach Anspruch 7 zur Herstellung von PVC-Folien.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 118 565 (EMS-INVENTA AG) * Seite 7, Zeilen 24-36 * --- | 1,2 | C 08 G 63/70 C 08 L 101/00 C 08 L 27/06 // (C 08 L 101/00 C 08 L 67:02 C 08 L 27:06 ) |
| A | GB-A- 737 929 (GENERAL ANILINE & FILM CORP.) * Ansprüche * ----- | 7,9 | |

RECHERCHIERTE SACHGEBIETE (Int. Cl.4)

C 08 G
C 08 L

Der vorliegende Recherchenbericht wurde für alle Patentansprüche erstellt

| Recherchenort | Abschlußdatum der Recherche | Prüfer |
|---|---|---|
| DEN HAAG | 30-06-1989 | WILSON A.J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)